Europäisches Patentamt

European Patent Office

Office européen des brevets

(19)

(11) Publication number: **0 032 631**
**A2**

# EUROPEAN PATENT APPLICATION

(12)

(21) Application number: 80304731.5

(22) Date of filing: 29.12.80

(51) Int. Cl.³: **C 07 C 69/712**, C 07 C 67/08,
**A 01 N 39/02**

(30) Priority: 16.01.80 GB 8001462
07.06.80 GB 8018720

(43) Date of publication of application: 29.07.81
Bulletin 81/30

(84) Designated Contracting States: **AT BE CH DE FR GB IT
LI LU NL SE**

(71) Applicant: **FBC LIMITED, Hauxton, Cambridge CB2 5HU
(GB)**

(72) Inventor: **Haynes, Harold George, 9 Caxton Lane Foxton,
Royston Hertfordshire (GB)**

(74) Representative: **Craig, Christopher Bradberry, Fisons
Limited Fison House Princes Street, Ipswich IP1 1QH
(GB)**

(54) Herbicidal phenoxyalkanoic acid derivatives, their preparation, compositions containing them, and their use.

(57) The invention provides low volatility derivatives of
the herbicide 2-(4-chloro-2-methylphenoxy)propionic acid
which are esters with alkanols of 10 to 20 carbon atoms or
polyesters with polyhydric alcohols. A process for their
preparation and herbicidal compositions containing them
are also described.

EP 0 032 631 A2

ACTORUM AG

HERBICIDAL PHENOXYALKANOIC ACID DERIVATIVES, THEIR PREPARATION, COMPOSITIONS CONTAINING THEM, AND THEIR USE.

This invention concerns novel derivatives of the known herbicide, mecoprop, i.e. 2-(4-chloro-2-methylphenoxy)-propionic acid.

Mecoprop has for some time been known as a herbicide, and has been commercially available in the form of its salts or lower esters. However, the salts cannot be formulated satisfactorily with other herbicides conventionally supplied as esters, and the esters of mecoprop frequently affect neighbouring, but untreated, crops. For example, when used in the neighbourhood of growing tomato plants or rape it is often found that those crops are affected detrimentally even though they have not been treated directly with the compound.

This effect could clearly be caused by many different mechanisms, e.g. spray drift onto the plants or soil translocation of the herbicidal material into the region of the roots of the plants, but we have found that it is not caused by either of these. On the contrary, we have found that the herbicidal material is transmitted through the air to the affected plants after application to the neighbouring areas. The commercially available derivatives of mecoprop we have concluded are so volatile that they are able to cause the depredations in neighbouring areas.

We have now produced novel derivatives of mecoprop which surprisingly do not suffer from the aforementioned disadvantages.

Accordingly, in one aspect this invention provides the mono esters of 2-(4-chloro-2-methylphenoxy)propionic acid with alkanols of from 10 to 20 carbon atoms and the polyesters of 2-(4-chloro-2-methylphenoxy)propionic acid with polyhydric alcohols.

In general, we prefer the esters with the monohydric alkanols.

The alkanol of 10 to 20 carbon atoms may be straight or branched, and is preferably of 10 to 14 carbon atoms. Especially preferred are the decanols, the undecanols, the dodecanols and the tridecanols, either in the form of a mixture of isomers, or as individual isomers, especially the branched chain isomers thereof. Particular mention may be made of the branched chain decanols, undecanols, dodecanols and tridecanols.

Where the ester of mecoprop is one formed with a polyhydric alcohol, it may be a full or a partial ester. Thus, for example, if the alcohol has four hydroxy groups, this invention extends to cover the di-, tri- and tetraesters and mixtures thereof. We prefer, however, the di-esters, even of alcohols having more than two hydroxy groups.

Preferably, the polyhydric alcohol employed has 2 to 4 hydroxy groups, especially 2-3, and particularly 2.

The polyhydric alcohol employed may be a straight or branched chain alcohol, and the chain may, if desired be interrupted by one or more oxygen atoms, e.g. digol or trigol.

Particular polyhydric alcohols which we prefer include glycerol, diethylene glycol, polyethylene glycol, propylene glycol, dipropylene glycol, polypropylene glycol, dibutylene glycol, polybutylene glycol, propanediol, butanediol, pentanediol, hexanediol, pinacol and pentaerythritol. Ethylene glycol is particularly preferred.

The novel derivatives may be prepared in standard ways for the production of esters, for example by heating the acid or an appropriate derivative thereof with the appropriate alcohol or mixture of alcohols in the presence of an acid catalyst, e.g. sulphuric acid, hydrochloric acid or p-toluenesulphonic acid. Suitable solvents for the reaction include aromatic, aprotic solvents such as xylene and toluene.

The invention also provides a herbicidal composition which comprises one or more compounds of the invention in association with a suitable carrier and/or surface active agents.

In a yet further aspect, the invention provides a method of combating weeds at a locus infested or liable to infestation therewith which comprises applying to said locus an effective amount of one or more compounds of the invention.

The present compositions can be prepared by admixing the ingredients. Usually the compositions are initially produced in the form of concentrates, e.g. containing 0.5-85% in toto of the present essential compounds, and these concentrates are diluted with water or a hydrocarbon, usually water, for application, generally such that the concentration of the essential compounds in toto is 0.05-5%, though in ultra low volume application the concentration may be higher, e.g. up to 20%.

The carrier may be a liquid, e.g. water (e.g. water used to dilute a concentrate for application). If water is employed as carrier in a concentrate, an organic solvent may also be present as carrier, though this is not usually employed. A surface active agent may advantageously be present.

The carrier may be a liquid other than water, for example an organic solvent, such as a water immiscible solvent, e.g. a hydrocarbon which boils within the range 130-300°C, e.g. xylene, in which the essential compounds are dissolved or suspended. A concentrate containing a water immiscible solvent suitably also contains a surface active agent so that the concentrate acts as a self-emulsifiable oil on admixture with water. The liquid may be a wholly or partly water miscible solvent e.g. cyclohexanone, isophorone, mesityl oxides, 2-methoxy ethanol, methanol, propylene glycol, diethylene glycol, diethylene glycol monoethyl ether, formamide, methylformamide, or dimethylformamide.

The preferred compositions of this invention are emulsifiable concentrate compositions which contain from 0.5 to 85% by weight of one or more compounds of this invention in association with a suitable organic liquid carrier, especially xylene.

Other herbicidal compounds may also be present in admixture with the compounds of the invention. Where suitable, they may be in co-formulation with the compounds of the invention or else may be mixed in the spray tank. Examples of other herbicidal compounds which may be mixed with the compounds of the invention include other substituted phenoxyaliphatic acids and their derivatives, substituted benzoic acids and their derivatives (e.g. dicamba), bromoxynil, ioxynil, benzaolin, 3,6-dichloro-picolinic acid and its derivatives, barban, difenzoquat, ureas, e.g. linuron, benzoylprop-ethyl, flamprop-methyl or L-flamprop-isopropyl.

A particularly preferred emulsifiable concentrate composition comprises from 0.5 to 85% by weight in toto of one or more compounds of the present invention and one or more esters of bromoxynil and/or ioxynil in association with a suitable organic liquid carrier. The octanoate esters of bromoxynil and ioxynil are particularly preferred. This mixture may also desirably contain linuron.

The term 'surface active agent' is used in the broad sense to include materials variously called emulsifying agents, dispersing agents and wetting agents. Such agents are well known in the art.

The surface active agents used may comprise anionic surface active agents, for example soaps, mono- or di-esters of phosphoric acid with fatty alcohol ethoxylates or salts or such esters, fatty alcohol sulphates such as sodium dodecyl sulphate, sodium octadecyl sulphate or sodium cetyl sulphate, ethoxylated fatty alcohol sulphates, ethoxylated alkylphenol sulphates, lignin sulphonates, petroleum sulphonates, alkyl-aryl sulphonates such as alkylbenzene sulphonates or lower alkylnaphthalene sulphonates e.g butylnaphthalene sulphonate, salts of sulphonated naphthalene-formaldehyde condensates, salts of sulphonated phenol-formaldehyde condensates, or more complex sulphonates such as the amide sulphonates e.g. the sulphonated condensation product of oleic acid and N-methyl taurine or the dialkyl sulphosuccinate e.g. the sodium sulphonate of dioctyl succinate.

The surface active agents may also comprise non-ionic agents, for example condensation products of fatty acid esters, fatty alcohols, fatty acid amides or fatty-, alkyl- or alkenyl-substituted phenols with ethylene oxide, fatty esters of polyhydric alcohol ethers e.g. sorbitan fatty acid esters, condensation products of such esters with ethylene oxide e.g. polyoxyethylene sorbitan fatty acid esters, block copolymers of ethylene oxide and propylene oxide, acetylenic glycols such as 2,4,7,9-tetramethyl-5-decyn-4,7-diol, or ethoxylated acetylenic glycols.

The surface active agents may also comprise cationic agents, for example alkyl- and/or arylsubstituted quaternary ammonium compounds such as cetyl trimethylammonium bromide or ethoxylated tertiary fatty amines.

Preferred surface active agents include ethoxylated fatty alcohol sulphates, lignin sulphonates, alkyl-aryl sulphonates, salts of sulphonated naphthalene-formaldehyde condensates, salts of sulphonated phenol-formaldehyde condensates, dialkyl sulphosuccinates, alkyl phenol ethoxylates, and fatty alkyl ethoxylates.

Non-ionic surface active agents are preferred.

The compounds of the invention may be used in admixture or sequence with a non-phytotoxic oil, e.g. Agri-Oil Plus, Sun Oil 11E or Fyzol 11E.

The compounds of the invention may be employed in association with a herbicidal antidote (a substance having the property of improving the safety to crops of the compounds), e.g. N,N-diallyl-2,2-dichloroacetamide, 4'-chloro-2-hydroxyiminoacetanilide or 1,8-naphthalic anhydride. Although the antidote may be applied in admixture with one or more of the essential compounds, it is preferably applied separately, and especially as a treatment for the crop seeds. The ratio by weight of total herbicide to antidote is preferably from 1:2 to 8:1.

The present compounds may be used in admixture or sequence with inorganic salts, for example ammonium sulphate, which improve the activity of some herbicides. For this, the inorganic salts may be applied for example at 0.2-20, e.g. 2, kg per hectare, and may for instance be admixed with the present essential compounds in a spray tank immediately before use.

The present compounds may be employed in admixture or sequence with a fertilizer.

The present compounds may be applied to plants, the soil, land or aquatic areas. They are active against a wide range of weeds; for instance, in winter cereal crops they can be used to control mayweed (Matricaria spp), chickweed (Stellaria media), speedwell (Veronica spp),

cleavers (<u>Galium</u> <u>aparine</u>) and viola spp, and in spring cereal crops they can be used to control mayweed, chickweed, knotgrass (<u>Polygonum</u> <u>aviculare</u>), blackbindweed (<u>Polygonum</u> <u>convulvulus</u>) and redshank (<u>Polygonum</u> <u>persicaria</u>). They are preferably used to combat weeds selectively at a locus at which a crop, e.g. a cereal crop, especially wheat or barley, is growing or, less preferably, is to grow immediately after application.

They may be employed for pre-emergence use, though preferably they are employed for post-emergence use.

Preferably 0.25 to 6.0 kg of acid equivalent per hectare is applied to winter cereal crops or to spring cereal crops.

The following Examples are now given, though only by way of illustration.

<u>Example 1</u>

<u>2-(4-Chloro-2-methylphenoxy)propionic acid mixed tridecyl</u>
<u>ester</u>

Technical grade (±)-2-(4-chloro-2-methylphenoxy)-propionic acid containing 95.5% of the 4-chloro-2-methyl isomer by gas chromatography (60.12 grams) was stirred with a mixture of branched chain isomers of tridecanol (55.5 grams), toluene (270 mls) and concentrated sulphuric acid (6 mls) at 56$^{O}$C for 21 hours. The mixture was washed with 300 mls water, 150 mls of 10% sodium carbonate solution and finally twice with 250 mls of water. Toluene was then evaporated off, end conditions being 130°C at 1.5 mms pressure. 104.65 grams of oily crude tridecyl ester remained containing 94.7% by weight of the desired product.

Example 2

Technical grade (±)-2-(4-chloro-2-methylphenoxy)-propionic acid (500gm), technical grade isodecanol (369gm), technical grade xylene mixed isomers (420ml) and p-toluenesulphonic acid (2.5gm), were stirred together for 5 hours at 120°C under reduced pressure (about 280 Torr) in an apparatus including a Dean and Stark type receiver such that the water formed by the reaction was continuously removed azeotropically. Residual unreacted acid was then neutralised with triethylamine. The yield of isodecanol ester, as measured by saponification and gas chromatography, was 99.3%, bp 170°C at 0.5 Torr.

Example 3

2-(4-(Chloro-2-methylphenoxy)propionic acid, ethylene glycol diester

A mixture of 2-(4-chloro-2-methylphenoxy)propionic acid (53.6g), ethylene glycol (7.75g), benzene (250 ml) and concentrated sulphuric acid (1.5g) was refluxed with stirring for 18 hours, water being removed continuously by a Dean and Stark device. The reaction mixture was cooled and washed successively with water (2 x 100 ml), 10% aqueous potassium carbonate (3 x 70 ml) and water (2 x 100 ml). It was then dried over sodium sulphate and the benzene was removed by rotary film evaporation under 0.5 mm Hg pressure. A brown oil (52.3g) was obtained which spectroscopy and chromatography showed to be almost pure diester, bp 250$^O$C at 0.5 Torr.

Examples 4-7

By methods analogous to that of Example 3, the following mecoprop esters were prepared from the given starting alcohols.

| Product | Starting material |
| --- | --- |
| 4. Glycerol diester | Glycerol (11.5g) |
| 5. Digol diester (52g) | Digol, $HO(CH_2CH_2O)_2H$, (13.3g) |
| 6. Trigol diester (59.6g) | Trigol, $HO(CH_2CH_2O)_3H$, (18.8g) |
| 7. Propylene glycol diester | Propylene glycol (8.75g) |

Example 8

An emulsifiable concentrate containing 400 g/l of mecoprop acid equivalent was prepared from the following:

| | |
| --- | --- |
| Mixed Tridecyl ester of mecoprop | 784 g |
| Arylan CA | 65 g |
| (calcium dodecylbenzenesulphonate, 70% alcoholic solution) | |
| Texofor D20 | 35 g |
| (condensation product of castor oil with 20 moles ethylene oxide) | |

Solvesso 200 (to 1 litre)      approx. 100 ml

(aromatic petroleum fraction)

Equivalent formulations were also prepared using respectively the ethylene glycol diester, the digol diester, the trigol diester, the 1,2-propanediol diester, the glycerol diester and, for comparison purposes, the iso-octyl ester.

## Example 9

French bean plants were sprayed with an aqueous dilution of the tridecyl ester formulation of Example 8 at rates equivalent to 5.6 and 1.4 kg of mecoprop acid equivalent per hectare. Immediately after spraying, individual plants were placed in polythene chambers adjacent to (but not touching) unsprayed test plants of chickweed (sown), chickweed (transplanted), French bean and cucumber. The chambers containing the plants were kept in the greenhouse at 20-22$^{\circ}$C for 2 days and then the degree of epinasty (growth distortion) of the unsprayed plants was assessed on a percentage scale. Similar experiments were carried out using the commercially available isooctyl ester of mecoprop at the same rates of acid equivalent. The results are tabulated below:

| Sprayed treatment (Kg ai/ha) | % effect (epinasty) on unsprayed plants | | | |
|---|---|---|---|---|
| | Chickweed (sown) | Chickweed (transplanted | French Bean | Cucumber |
| Tridecyl ester 5.6 | 0 | 0 | 0 | 0 |
| 1.4 | 0 | 0 | 0 | 0 |
| Isooctyl ester 5.6 | 62 | 30 | 15 | 27 |
| 1.4 | 70 | 15 | 10 | 20 |

Example 10

The various ester formulations of Example 8 were individually sprayed at rates of 2.8, 5.6, 11.2 or 22.4 kg ai/ha in 200 l/ha onto pots of tillered blackgrass. Within an hour of spraying, the plants were placed in polyethylene chambers on the greenhouse bench. Air was free to flow into the chamber through the perforation in the bench. Unsprayed chickweed 'test' plants were placed at the same time as the blackgrass into the polyethylene chambers adjacent to, but not touching the blackgrass plants. No plant was in contact with the polyethylene chamber itself.

The percentage distortion/growth reduction in the test plants was assessed over days 1-4 following spraying.

The results obtained were as shown below.

| Ester | Rate (kg/ha) | % effect |
|---|---|---|
| Iso-octyl | 5.6 | 72 |
| | 2.8 | 60 |
| Decyl | 11.2 | 30 |
| Tridecyl | 22.4 | 0 |
| Ethylene glycol diester | 11.2 | 14 |
| | 22.4 | 32 |
| Digol diester | 22.4 | 18 |
| Trigol diester | 22.4 | 0 |

Claims

1. A mono ester of 2-(4-chloro-2-methylphenoxy)propionic acid with an alkanol of from 10 to 20 carbon atoms or a polyester of 2-(4-chloro-2-methylphenoxy)propionic acid with a polyhydric alcohol.

2. An ester according to Claim 1 formed with an alkanol of from 10 to 14 carbon atoms.

3. An ester according to Claim 2 formed with a branched chain decanol, undecanol, dodecanol or tridecanol.

4. The isodecyl ester of 2-(4-chloro-2-methylphenyl)-propionic acid.

5. An ester according to Claim 1 formed with a polyhydric alcohol of 2 to 4 hydroxy groups.

6. An ester according to Claim 5 wherein the polyhydric alcohol is ethylene glycol, glycerol, diethylene glycol, polyethylene glycol, propylene glycol, dipropylene glycol, polypropylene glycol, dibutylene glycol, polybutylene glycol, propanediol, butanediol, pentanediol, hexanediol, pinacol or pentaerythritol.

7. An ester according to any of Claims 1, 5 or 6 which is a diester formed with a polyhydric alcohol.

8. A process for the preparation of an ester according to any of Claims 1 to 7 which comprises reacting 2-(4-chloro-2-methylphenoxy)propionic acid or a suitable derivative thereof with an alkanol of from 10 to 20 carbon atoms or with a polyhydric alcohol to give the desired ester.

9. A herbicidal composition which comprises from 0.5 to 85% by weight of one or more compounds according to any of Claims 1 to 7 in association with a suitable carrier and/or surface active agent.

10. A herbicidal composition which comprises from 0.5 to 85% by weight in toto of one or more compounds according to any of Claims 1 to 7 and one or more esters of bromoxynil and/or ioxynil in association with a suitable organic liquid carrier.

11. A method of combating weeds at a locus infested or liable to infestation therewith which comprises applying to said locus an effective amount of one or more compounds according to any of Claims 1 to 7.